# EUROPEAN PATENT SPECIFICATION

(11) **EP 0 903 975 B1**
(45) Date of publication and mention of the grant of the patent: **23.04.2003**
(21) Application number: 98900105.2
(22) Date of filing: 09.01.1998
(51) Int. Cl.: A01G 13/02

(54) **PLASTIC SHEET FOR SOIL COVERAGE**
KUNSTSTOFFFOLIE ZUR BODENBEDECKUNG
FEUILLE EN PLASTIQUE SERVANT RECOUVRIR LE SOL

(30) Priority: 10.01.1997 GR 97100007
(43) Date of publication of application: 31.03.1999
(73) Proprietor: Daios, Asterios D., 592 00 Naousa (GR)
(72) Inventor: Daios, Asterios D., 592 00 Naousa (GR)
(74) Representative: Argyriadis, Korinna
(86) International application number: GR9800001
(87) International publication number: WO98030082

(56) References cited:
- DE-A- 19 500 635
- FR-A- 2 544 960
- FR-A- 2 689 726
- US-A- 4 833 822
- PATENT ABSTRACTS OF JAPAN vol. 096, no. 010, 31 October 1996 & JP 08 149929 A (UNITIKA LTD), 11 June 1996,

## Description

The invention refers to a plastic sheet for soil coverage, produced by extrusion from a flat or circular die head, which is used for cultivations with soil coverage or for cultivations in shallow ditches. In order to be safely retained on the ground or the shallow ditch, the plastic sheet for soil coverage bears, small and repeated independent water pockets at its sides, which provide the necessary weight for its retention. The quantity of water contained into the independent water pockets is such that whereas the plastic sheet for soil coverage is rigidly retained to the ground or the frame of the shallow ditch, and it can be also easily lifted for performing the necessary cultivation works and especially the collection of the crop.

During their installation, the simple plastic sheets that are used for cultivations with soil coverage or for cultivations in shallow ditches - like asparagus and horticultural species- are stably and permanently applied onto the cultivation line. Thus, some weight is added along their whole length or at fixed spaces on either side (mainly this weight being soil) in order that they remain fixed in place and are not displaced by wind, snow, etc.

Such types of coverage have a serious disadvantage as they do not permit the easy access to the cultivation that they cover.

For this reason, several solutions have been developed involving plastic sheet for soil coverage which bear at their sides receptions for soil or which feature built - in ropes which with the assistance of hooks retain the plastic sheet for soil coverage rigidly onto the ground.

This solution, although it solves the problems of simple plastic sheets, is very hard to apply, whereas regarding the soil being used, it renders the re-use of the plastic sheet impossible. Furthermore, the installation cost of the plastic sheet is significant as the process requires high labour costs.

A last method that has been developed is that of the introduction of water for adding weight to the plastic sheet (either via a tubular form folded at its side, or by introducing or welding a flexible plastic tube of a small diameter at its side' which solves the problem of re-use but has the significant disadvantage that in the case that even a small hole exists - something very probable - in the tube which contains the water, then the tube is emptied and the plastic sheet is not suitable for soil coverage even for one single cultivation year. Such a sheet is disclosed in DE-A-195 00 635.

These are the reasons why such solutions have not found practical applications so far.

All the above problems of common plastic sheets and methods for soil coverage are solved by the present invention of the plastic sheet for soil coverage which combines the following characteristic features:
1. It is made of a plastic sheet which is thick enough for its use and features strength against piercing and tearing, using LLDPE, LDPE, EVA, PP or combination thereof as a raw material.
2. Narrow bands from the same plastic sheet are folded at its sides, in each of which, and by using both:
   a) a continuous longitudinal thermally welded seam which welds the edge of the narrow folded band with the plastic sheet located underneath it, along its overall extent
   b) and thermal weldings of any geometrical or natural shape repeated along the length of the sheet, each of which starts from the crease of the narrow folded band and is at a distance of at least thirty millimetres from the continuous thermally welded seam and welds the narrow folded band with the plastic sheet located underneath it;
the following items are formed at the side:
1. The tube for filling with water the independent water pockets. This tube is enclosed between the continuous thermally welded seam and the repeated shaped thermal weldings. Its minimum diameter in a full circular cross section is of 10 millimetres and is steady or variable according to the shape of the shaped weldings.
2. The independent water pockets. Each independent water pocket is enclosed between the crease of the narrow folded band and two successive shaped thermal weldings (each shaped thermal welding constituting the limit between two successive water pockets) and communicates only with the filling tube via the water inlet passage and, when in use, traps the water flowing into it from the filling tube.
   Its maximum length in any form of construction is up to 100 centimetres (with a preferred value of 30 centimetres) and its maximum width up to 30 centimetres (with a preferred value of 10 centimetres). Its shape, as shown onto the plastic sheet for soil coverage, can be of any geometric or natural shape, such as an inclined or oblong rectangle, a triangle, a circle, a trapezoid, etc.
3. The passage of water from the filling tube to the independent water pockets. Each water passage is formed by the nearest points between two successive repeated shaped weldings. Its length varies between 5 and 100 millimetres (with a preferred value of 10 millimetres).

This invention offers the following advantages:

Quick and safe installation of the plastic sheet for soil coverage without excessive labour costs. Thus, the plastic sheet for soil coverage which is wound in rolls of a length between 100 and 1000 meters, as it is unwound by a mechanical or manual unwinding device, fills the water supply tube at the front part of the filing tube with water under pressure. As the water runs along the filling tube, it simultaneously fills the independent water pockets via the inlet passages. Thus, without any risk, all the part of the plastic sheet for soil coverage which is unwound is immediately filled with water and the weight of the latter forces the plastic sheet for soil coverage to be applied onto the earth bank or the frame of the shallow ditch.

It is not necessary to tie the ends of the plastic sheet for soil coverage in each of the coverage rows with special equipment, as the water that has entered via the filling tube into the independent water pockets is trapped in them and does not flow out.

In case where any of the independent water pockets is pierced, it is emptied and becomes obsolete without affecting the stability of the overall layout as the adjacent pockets remain intact and filled with water. The larger the number of independent water pockets per unit length of the plastic sheet for soil coverage, the smaller the relative loss of weight due to a pierced pocket.

The application of the plastic sheet for soil coverage can be effected even during windy days, as the application of the retention weight is immediate.

The water itself is used as a heating element as it is heated by the sunlight and steadily transfers this heat to the underlying soil (especially in cases where the independent water pockets are wide enough).

At the end of the season of cultivation the plastic sheet for soil coverage is easily emptied of water and thus the time required for the collection and removal of the plastic sheet for soil coverage is minimised.

The plastic sheet for soil coverage offers maximum re-use potential as well as recycle potential after its last use, as the use of water as retention weight is absolutely safe and clean.

As the water pockets are independent, the emptying process can be directed at will. As this assists the automation of the application with labour cost minimisation and at minimum time, the plastic sheet for soil coverage is wound at the end of the cultivation period into a roll with the assistance of a mechanised rolling device, the water being simultaneously emptied from it.

In the sequel, the invention is described with reference to the accompanying drawings:
- Drawing 1: Perspective view of the plastic sheet for soil coverage (1) and detail of the filling tube (6) and the independent water pockets.

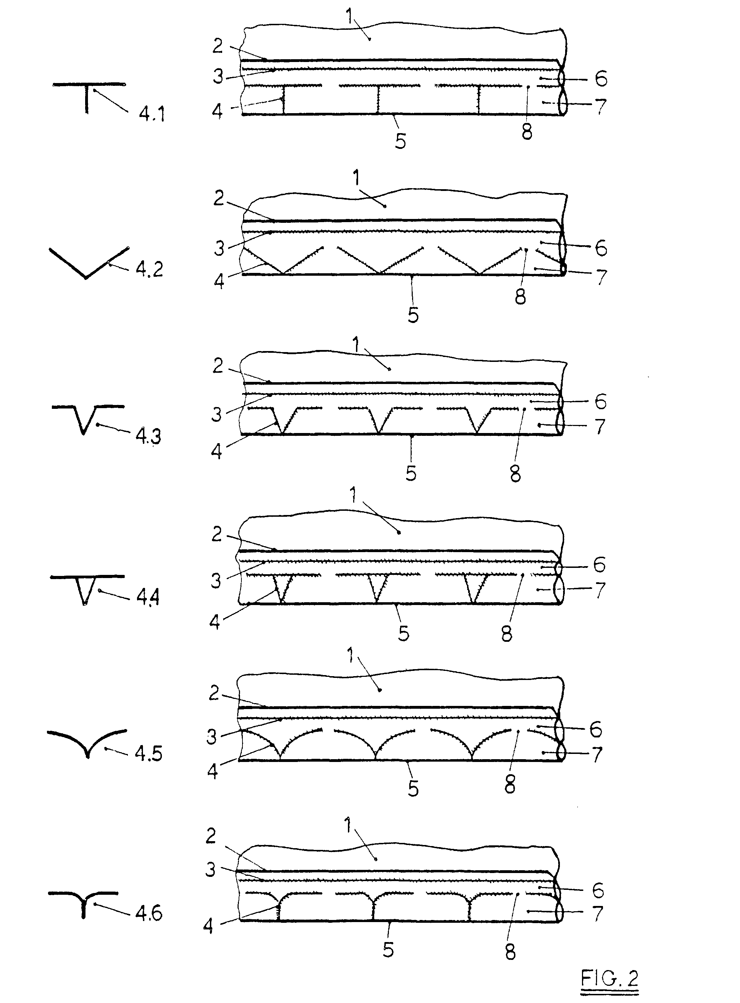

- Drawing 2: Various linear shapes of shaped thermal weldings(4.1-4.6)and respective details of the construction of filling tube (6) and the independent water pockets (7).

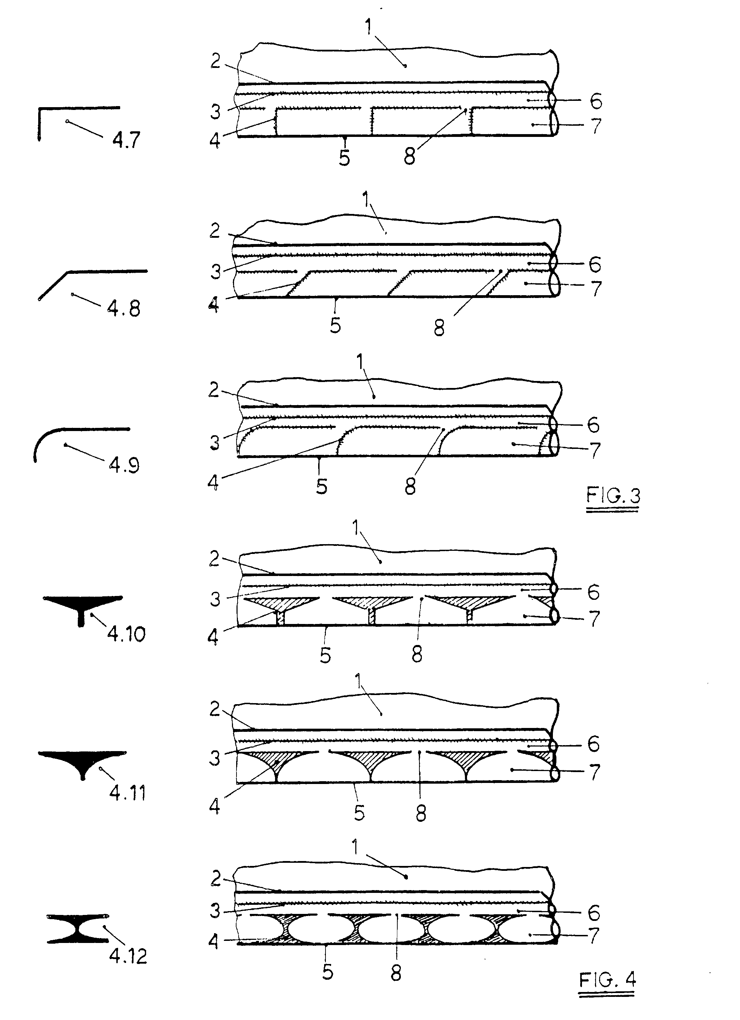

- Drawing 3: Various linear shapes of shaped thermal weldings (4.7-4.9) that can offer the ability to direct the water emptying process from the independent water pockets (7) and respective details of the construction of the filling tube (6) and the independent water pockets (7).
- Drawing 4: Various non - linear shapes of shaped thermal weldings (4.10 - 4.12) and respective details of the construction of the filling tube (6) and the independent water pockets (7).
- Drawing 5: Detail of a modified construction of the plastic sheet for soil coverage where two filling tubes are formed per narrow folded band (6a - 6b).
- Drawing 6: Detail of a method of construction of the filling tube (6) and the independent water pockets (7) in the case where the latter are wide enough to operate mainly as a passive heating system and shape of the shaped thermal welding (4.13) where from they derive.
- Drawing 7: Process of installation of the plastic sheet for soil coverage (1) in the linear cultivation of asparagus (12).

In the sequel, a method of realisation of the invention is described:

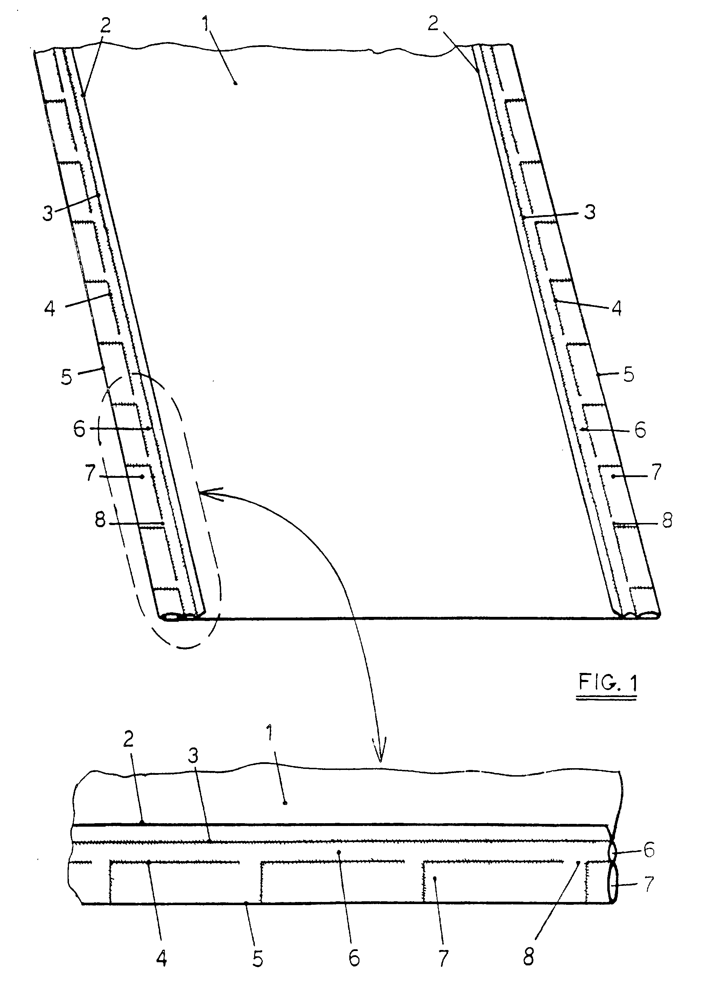

The two edges (2) of a plastic sheet (drawing 1) which is produced by extrusion by a flat or circular die head are folded along its length so that narrow bands of a width up to 40 cm (with a preferred value of 15 centimetres) are formed. Each narrow folded band is thermally welded with the part of the plastic sheet underneath it with a continuous longitudinal thermally welded seam (3) at a distance of up to 5 centimetres (with a preferred value of 2 centimetres) from its end (2).

At the same time, in each folded band, a shaped thermal welding (4) is created with the use of a rotating thermal welding mechanism or moving thermal welding jaws, via which the narrow folded band is welded thermally with the part of the plastic sheet located underneath it. The shaped thermal welding has any linear straight (e.g. 4.1, 4.2, 4.3, 4.4, 4.7, 4.8) or curved (4.5, 4.6, 4.9) or natural (4.10, 4.11, 4.12) shape.

This shaped thermal welding is repeated at constant distance (ranging from 10 to 100 centimetres, depending on its shape, with a preferred distance of 30 centimetres) along the plastic leaf and onto the narrow folded band.

The smallest distance between two consecutive shaped thermal weldings (4) ranges between 5 and 100 millimetres (with a preferred value of 10 millimetres) and constitutes the inlet passage (8) of the water from the filling tube (6) to each independent water pocket (7). The shaped thermal weldings (4) start from the crease of the plastic sheet (5) and end at a distance up to 30 millimetres from the continuous thermally welded seam (3) so that in this manner the lack of communication of the independent water pockets (7) is achieved.

The filling tube (6) is formed by this part of the folded band located between the continuous (3) and the repeated shaped thermal weldings (4). Its diameter, in a full circular cross section is at least 20 millimetres (fixed or variable, depending on the shape of the shaped thermal welding).

Each independent water pocket (7) is formed between the crease of the folded part (5) and two consecutive shaped thermal weldings. Its maximum dimensions range between 10 and 100 centimetres in length (with a preferred value of 30 centimetres) and between 2 and 30 centimetres in width (with a preferred value of 10 centimetres).

Each water inlet passage (8) is formed between the closest points of two consecutive shaped thermal weldings.

Some shapes of the shaped thermal weldings (such as 4.7, 4.8, 4.9) may permit the direction of the emptying of the independent water pockets(7).

These, form such a shape in each independent water pocket, so that running along one direction of the plastic sheet for soil coverage, the last part of it that comes across is the inlet passage. By pressing in this direction, the water contained is easily emptied.

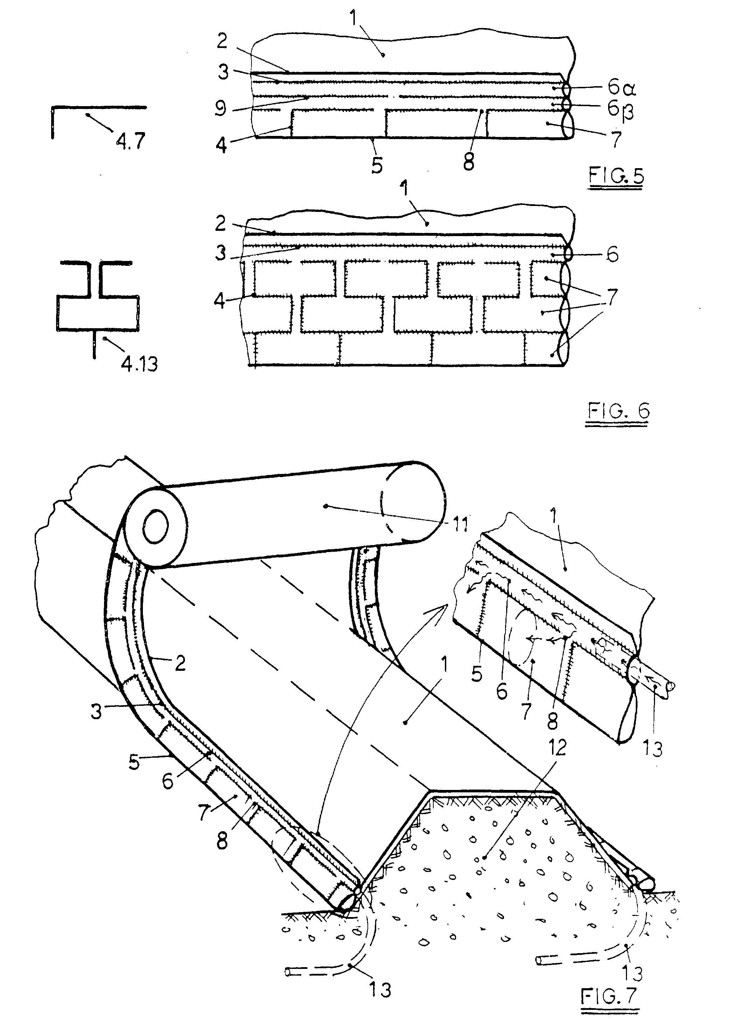

According to a modified solution (drawing 5) two differed series can be constructed with a filling tube (6a and 6b), for each of the narrow folded bands, these can be connected to each another at different positions, so that the application is safer, than in the previous case where the single filling tube (6) could be pierced. In this case, the external filling tube (6a) is contained between a continuous (3) and a discontinuous (9) thermal welding seam and the internal filling tube (6b) is contained between a discontinuous thermal welding seam (9) and the repeated shaped thermal weldings (4).

Finally, in the case where passive heating is a prime concern (drawing 6), the independent water pockets(7) can have a larger width, formed by respective shaped thermal weldings.

The plastic sheet for soil coverage (1) is rolled in 100 - 1000 meters rolls during its manufacture and for the ease of manufacture can be symmetrical to its longitudinal central axis. During its installation in the field (drawing 7), a water supply is easily attached (13) at the front part of each filling tube (6), supplying water for filling any of the independent water pockets located in the part of the plastic sheet for soil coverage that has been unwound. Thus, its secure installation is imminent and can be effected even during windy days. The plastic sheet for soil coverage does not have to be tied at the ends of each soil coverage row, so that the filling tubes are tightened, as the useful quantity of water is located inside the independent water pockets (7) and leakage from the pockets towards the filling tube (6) during its use is negligible, so that during the soil coverage process, the water losses are insignificant. In the case where some independent water pocket (7) is pierced during its use, only this pocket is emptied, without effectively influencing the stability of the retention of the plastic sheet for soil coverage.

All the above combine towards offering significant improvements to the cultivation process and towards savings of labour costs.

Further labour cost savings are effected in the case of independent water pockets with a capability to direct the water flow. In this case, the collection of the plastic sheet for soil coverage is fully automated, so that it can be re-used in the following year.

When obsolete, the plastic sheet for soil coverage, can be easier recycled than other types of plastic sheet used for soil coverage, as it is less contaminated by soil.

Finally, materials such as EVA and kaolin could be added to the plastic sheet which absorb or reflect the thermal radiation of the soil, or materials which absorbs the ultraviolet radiation of the sunlight (UV absorbers), or combinations thereof, thus enhancing the plastic sheet for soil coverage with additional properties.

## Claims

1. Plastic sheet (1) for soil coverage made of a material resistant to tearing and piercing such as LLDPE, LDPE, PP, EVA or a combination thereof, of any colour which is **characterised by** that it bears along the longitudinal direction of its sides:
a) independent water pockets (7),repeated continuously along its length, which during its use are filled with water which provides the necessary weight for the safe retention of the sheet onto the ground or the shallow ditches.
b) a tube (6) for filling with water the repeated independent water pockets (7), which is used for filling each independent water pocket (7) with water.
c) water passages (8) from the filling tube (6) to each independent water pocket (7).
which are formed by folding a narrow band (5) along the length of the plastic sheet, and by thermally welding of the band with the part of the plastic sheet located underneath it via a continuous thermally welded seam (3) along the edge (2) of the band, and by creating shaped thermal weldings (4) repeated along the length of the plastic sheet, which start from the crease of the narrow folded band (5) and end at a distance up to 3 centimetres from the continuous thermally welded seam (3) in such a manner that:
i) each repeated independent water pocket (7) is formed between the crease of the folded band (5) and two consecutive shaped thermal weldings (4).
ii) the filling tube (6) is formed between the continuous thermally welded seam (3) and the repeated shaped thermal weldings (4).
iii) Each water passage (8) is formed between the two nearest points of two continuous shaped thermal weldings (4).

2. Plastic sheet for soil coverage according to claim 1 which is **characterised by** that each independent water pocket (7) may have any geometrical or natural shape depending on the respective shape of the shaped thermal welding (4.1 to 4.13) and a length of up to one meter, with a preferred length of 30 centimetres, and a width of up to 30 centimetres, with a preferred width of 10 centimetres, and each filling tube (6) has a minimum width of 3 centimetres and each water passage (8) has a minimum length 5 millimetres.

3. Plastic sheet for soil coverage according to claims 1 and 2 which is **characterised by** that it bears along its longitudinal side a second filling tube formed by the addition of a discontinuous thermally welded seam (9) between the continuous thermally welded seam (3) and parallel to it and the repeated thermal weldings (4) along the length of the sheet.

4. Plastic sheet for soil coverage according to claims 1 to 3 which is **characterised by** that it contains materials which absorb or reflect the thermal radiation of the ground, such as EVA, kaolin, or materials which absorb the ultraviolet radiation of the sunlight, or a combination thereof.

## Patentansprüche

1. Plastikfolie (1) zur Bodenbedeckung bestehend aus einem reiß- und durchbohrungsfesten Material wie z.B. LIDPE, LDPE, PP, EVA oder aus einer Kombination dieser Materialien, beliebiger Farbe, **gekennzeichnet dadurch daß** sie in Längsrichtung ihrer Seiten folgende Mittel trägt:
a) unabhängige Wassersäcke (7), dauernd wiederholt entlang ihrer Länge, die während ihres Gebrauchs mit Wasser gefüllt werden, das das notwendige Gewicht zur sicheren Haltung der Folie auf dem Boden oder in den seichten Nuten gewährleistet,
b) ein Rohr (6) zur Wasserfüllung der wiederholten unabhängigen Wassersäcke (7), wobei das Rohr zur Wasserfüllung von jedem einzelnen Wassersack gebraucht wird,
c) Wasserpassagen (8) vom Füllungsrohr (6) zu jedem unabhängigen Wassersack (7),
die durch Falten eines engen Bandes (5) entlang der Plastikfolie und durch thermische Schweißung des Bandes mit dem unter ihm befindlichem Teil der Plastikfolie gebildet werden, durch eine kontinuierliche thermische Schweißnaht (3) entlang der Kante (2) des Bandes und durch Bildung von geformten thermischen Schweißungen (4), die entlang der Plastikfolie wiederholt werden und die an der Falte des engen gefalteten Bandes (5) beginnen und in einem Abstand von bis zu 3 Zentimetern von der kontinuierlichen thermischen Schweißnaht (3) enden und zwar in einer solchen Art und Weise daß:
i) jeder wiederholte unabhängige Wassersack (7) zwischen der Falte des gefalteten Bandes (5) und zwei hintereinander geformten thermischen Schweißungen (4) gebildet wird,
ii) das Füllungsrohr (6) zwischen der kontinuierlichen thermischen Schweißnaht (3) und den wiederholten geformten thermischen Schweißungen (4) gebildet wird,
iii) jede Wasserpassage (8) zwischen den zwei näheren Punkten von zwei kontinuierlich geformten thermischen Schweißungen (4) gebildet wird.

2. Plastikfolie zur Bodenbedeckung nach Anspruch 1, **gekennzeichnet dadurch daß** jeder unabhängige Wassersack (7) jede beliebige geometrische oder natürliche Form entsprechend der Form der geformten thermischen Schweißung (4.1 bis 4.13) und eine Länge von bis zu einem Meter, bevorzugt 30 Zentimeter, und eine Breite von bis zu 30 Zentimetern, bevorzugt 10 Zentimeter, aufweisen kann, und daß jedes Füllungsrohr (6) eine Mindestbreite von 3 Zentimetern aufweist und daß jede Wasserpassage (8) eine Mindestlänge von 5 Millimetern aufweist.

3. Plastikfolie zur Bodenbedeckung nach den Ansprüchen 1 und 2, **gekennzeichnet dadurch daß** sie an ihrer Längsseite ein zweites Füllungsrohr trägt, das durch den Zusatz einer diskontinuierlichen thermischen Schweißnaht (9) zweischen der kontinuierlichen thermischen Schweißnaht (3) und den parallel zu ihr befindlichen und wiederholten thermischen Schweißungen (4) entlang der Folie gebildet wird.

4. Plastikfolie zur Bodenbedeckung nach den Ansprüchen 1 bis 3, **gekennzeichnet dadurch daß** sie Materialien enthält, die die thermische Strahlung des Bodens absorbieren oder reflektieren, wie z.B. EVA, Kaolin, oder Materialien, die die ultraviolette Strahlung der Sonne oder eine Kombination dieser Strahlungen absorbieren.

## Revendications

1. Feuille de plastique (1) pour couvrir le sol, en matériau résistant à déchirure et au perçage comme LLDPE, LDPE, PP, EVA ou une combinaison d' entre eux, de quelconque couleur, **caractérisée en ce qu'**elle porte tout le long de la direction longitudinale de ses côtés:
a) Poches d'eau indépendantes (7), répétées continuellement sur sa longueur, qui pendant l'utilisation sont remplis d'eau; l'eau offre le poids nécessaire pour la rétention sûre de la feuille sur le sol ou les fossés peu profonds;
b) Un tuyau (6) pour remplir d'eau les poches d'eau indépendantes répétées (7), qui est utilisé pour remplir d'eau chaque poche d'eau indépendante (7);
c) Passages d'eau (8) par le tuyau de remplissage (6) à chaque poche d'eau indépendante (7);
qui sont formés par le plissement d'une bande étroite (5) le long de la feuille de plastique, et par la soudure thermique de la bande sur la partie de la feuille de plastique qui est au-dessous de la bande par une ligne continue de soudure thermique (3) le long du bord (2) de la bande et par la création de soudures thermiques formées (4) répétées sur la longueur de la feuille de plastique, qui commencent par le pli de la bande étroite pliée (5) et terminent a une distance jusqu'à 3 centimètres de la ligne continue de soudure thermique (3) de façon que:
i) Chaque poche d' eau indépendante répétée (7) est formée entre le pli de la bande pliée (5) et deux soudures thermiques formées successives (4).
ii) Le tuyau de remplissage (6) est formé entre la ligne continue de soudoure thermique (3) et les soudures thermiques formées répétées (4).
iii) Chaque passage d' eau (8) est formé entre les deux points plus proches des deux soudures thermiques formées continues (4).

2. Feuille de plastique pour couvrir le sol selon la revendication 1, **caractérisée en ce que** chaque poche d' eau indépendante (7) peut avoir queloconque forme géométrique ou naturelle selon la forme respective de la soudure thermique formée (de 4.1 a 4.13) et une longueur jusqu'à un mètre, quand la longueur préférée est 30 centimètres, et une largeur jusqu'à 30 centimètres, quand la largeur préférée est 10 centimètres, et la largeur minimale de chaque tuyau de remplissage (6) est 3 centimètres et la longueur minimale de chaque passage d' eau (8) est 5 millimètres.

3. Feuille de plastique pour couvrir le sol selon les revendications 1 et 2, **caractérisée en ce qu'** elle porte sur le côté longitudinal un second tuyau de remplissage formé par l' addition d'une ligne continue de soudure thermique (9) entre la ligne continue de soudure thermique (3) et parallèle à elle et les soudures thermiques répétées (4) sur la longueur de la feuille.

4. Feuille de p;astique pour couvrir le sol selon les revendications 1 à 3, **caractérisée en ce qu'** elle contient de matériaux qui absorbent ou réfléchissent la radiation thermique du sol, comme EVA, kaolin ou matériaux qui absorbent la radiation ultraviolette du soleil ou une combinaison d' entre eux.
